# EUROPÄISCHE PATENTSCHRIFT

(11) **EP 2 194 212 B1**
(45) Veröffentlichungstag und Bekanntmachung des Hinweises auf die Patenterteilung: **15.02.2012**
(21) Anmeldenummer: 08405300.8
(22) Anmeldetag: 05.12.2008
(51) Int. Cl.: E04G 15/06

(54) **Schalungskasten**
Pipe casing
Coffrage pour tuyaux

(43) Veröffentlichungstag der Anmeldung: 09.06.2010
(73) Patentinhaber: Geberit International AG, 8645 Jona (CH)
(72) Erfinder: Evertz, Jörg, 8903 Birmensdorf (CH); Sprotte, Matthias, 8645 Jona (CH); Ricciardi, Nicola, 8808 Pfäffikon (CH)
(74) Vertreter: Groner, Manfred

(56) Entgegenhaltungen:
- EP-A- 0 276 191
- EP-A- 0 300 210
- FR-A- 2 865 489

## Beschreibung

Die vorliegende Erfindung betrifft einen Schalungskasten nach dem Oberbegriff des Anspruchs 1.

Bei Sanitärinstallationen werden flexible Wasserrohre zunehmend mit Schutzrohren verlegt. Die in solche Schutzrohre eingezogenen Wasserrohre werden grösstenteils einbetoniert. Hierzu sind Schalungskästen bekannt, die vor dem Betonieren auf einer Verschalung befestigt, insbesondere angenagelt werden. Nach dem Ausschalen ist das in den Schalungskasten eingeführte Ende des Rohres zugänglich, sodass dieses aus dem Rohführungskanal des Schalungskastens herausgebogen und an einen Verteiler angeschlossen werden kann.

Ein Schalungskasten dieser Art ist beispielsweise aus der CH 672 012 bekannt geworden. Die DE-A-4320648 offenbart einen Schalungskasten, der einen Kupplungsteil zum Verbinden gleichartiger, benachbarter Schalungskästen aufweist.

Die FR-A-2 865 489 offenbart einen Schalungskasten, der an einem unteren Ende des Rohrführungskanals einen Stutzen aufweist, in den ein Schutzrohr einschiebbar und in diesem mit Rastmitteln fixierbar ist. Mit diesem Stutzen ist das Schutzrohr an den Rohrführungskanal anschliessbar, jedoch nicht in diesen einführbar. Die Rastmittel sind in der Nähe der Eintrittsöffnung des Stutzens angeordnet.

Die EP-A-0 276 191 offenbart ebenfalls einen Schalungskasten mit einem Stutzen, an dem ein Schutzrohr angeschlossen ist. Die Fixierung des Schutzrohres erfolgt durch plastische Verformung des Stutzens.

Der Erfindung liegt die Aufgabe zugrunde, einen Schalungskasten der genannten Art zu schaffen, der ein noch einfacheres und sichereres Montieren ermöglicht.

Die Aufgabe ist bei einem gattungsgemässen Schalungskasten gemäss Anspruch 1 gelöst. Beim erfindungsgemässen Schalungskasten wird ein in den Rohrführungskanal eingeführtes Rohr im Rohrfiihrungskanal durch die genannten Rastmittel in Auszugsrichtung fixiert. Ein eingeführtes Schutzrohr ist damit zumindest provisorisch in der vorgesehenen Position fixiert. Damit ist sichergestellt, dass eingeführte Schutzrohre bei weiteren Montagearbeiten nicht teilweise aus dem Schalungskasten herausgezogen werden, was in der Regel nicht ohne weiteres bemerkbar wäre. Die Rastmittel sind vorzugsweise so ausgebildet, dass die Verrastung selbsttätig beim Einführen des Schutzrohres erfolgt. Die Montage ist dann ohne zusätzlichen Aufwand sicherer.

Nach der Erfindung ist vorgesehen, dass die Rastmittel in Einschubrichtung gesehen im Wesentlichen an einem Ende des Rohrführungskanals angeordnet sind. Das Schutzrohr wird beim Einschieben in den Rohrfiihrungskanal erst dann fixiert, wenn dieses im Wesentlichen vollständig bis zu einem Anschlag eingeschoben ist. Durch Ziehen am Schutzrohr gegen die Einschubrichtung kann dann einfach und sicher festgestellt werden, ob das Schutzrohr die gewünschte Position erreicht hat. Das Verrasten erfolgt vorzugsweise selbsttätig beim Einschieben des Rohres.

Eine besonders sichere Fixierung vor allem bei Wellrohren ist dann gewährleistet, wenn gemäss einer Weiterbildung der Erfindung die Rastmittel widerhakenförmig ausgebildet sind.

Nach einer Weiterbildung der Erfindung ist vorgesehen, dass die Rastmittel wenigstens zwei Rastelemente für unterschiedliche Rohrdurchmesser aufweist. Ein solcher Schalungskasten kann dann für unterschiedliche Rohrdurchmesser verwendet werden. Unter Rohrdurchmesser ist hier der Durchmesser des Schutzrohres gemeint.

Nach einer Weiterbildung der Erfindung ist vorgesehen, dass in der Öffnung Dichtungsmittel angeordnet sind, welche ein eingeführtes Rohr beim Einbetonieren nach aussen hin abdichten. Dadurch kann verhindert werden, dass beim Betonieren Beton in den Rohrführungskanal eindringen kann. Dies ist insbesondere dann gewährleistet, wenn gemäss einer Weiterbildung der Erfindung die Dichtungsmittel als Dichtungsmembran ausgebildet sind. Die Dichtungsmittel sind vorzugsweise so ausgebildet, dass sie bei einem eingeführten Wellrohr in eine Rille des Wellrohres eingreifen. Diese Dichtungsmittel bilden dann ebenfalls Mittel zum Fixieren des Wellrohres.

Nach einer Weiterbildung der Erfindung ist vorgesehen, dass die genannte Öffnung durch einen Stutzen gebildet ist, der schwenkbar am Gehäuse befestigt ist. Dies vereinfacht die Herstellung des Schalungskastens, insbesondere im Hinblick auf die genannten Dichtungsmittel.

Nach einer Weiterbildung der Erfindung weist das Gehäuse des Schalungskastens mehrere Rohrführungskanäle mit jeweils einer Öffnung zum Einführen eines Rohres auf. Nach einer Weiterbildung der Erfindung sind in zwei parallel zueinander verlaufenden Ebenen mehrere Öffnungen und Rohrführungskanäle vorgesehen. Eine besonders dichte Anordnung der Rohre ist dann möglich, wenn gemäss einer Weiterbildung der Erfindung das Halbverteilermass der genannten Öffnungen kleiner ist als der Aussendurchmesser der Rohre. Auch in diesem Fall handelt es sich um den Aussendurchmesser der Schutzrohre. Auf vergleichsweise kleinem Raum können dann somit mehrere Rohre im Schalungskasten untergebracht werden.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: eine Ansicht eines erfindungsgemässen Schalungskastens,
- Figur 2: ein Längsschnitt durch den Schalungskasten gemäss Figur 1,
- Figur 3: eine Draufsicht auf den erfindungsgemässen Schalungskasten,
- Figur 4: ein Längsschnitt durch den Schalungskasten, der auf einer abschnittweise gezeigten Schalung befestigt ist und in den ein Rohrende eingeführt ist,
- Figur 5: schematisches das Einführen und Verrasten eines Schutzrohres,
- Figur 6: eine räumliche Ansicht einer Variante des erfindungsgemässen Schalungskastens und
- Figur 7: eine Draufsicht auf den Schalungskasten gemäss Figur 6.

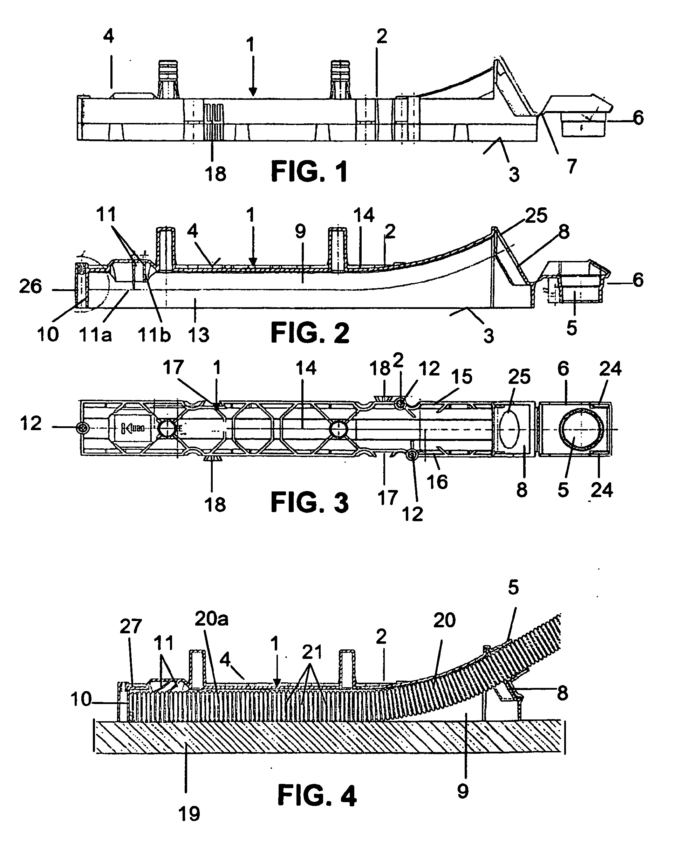

Der in den Figuren 1 bis 5 gezeigte Schalungskasten 1 besitzt ein Gehäuse 2, das vorzugsweise einstückig aus einem geeigneten Kunststoff hergestellt ist und gemäss Figur 4 auf einer Schalung 19 zum Einbetonieren befestigt werden kann. Das Gehäuse 2 ist wie ersichtlich länglich ausgebildet und besitzt eine Unterseite 3, die eine Öffnung 13 besitzt, die sich im Wesentlichen über die gesamte Länge des Gehäuses 2 erstreckt. Ferner besitzt das Gehäuse 2 eine obere Wandung 14, zwei Seitenwandungen 15 und 16 sowie eine Wandung 26, die am Ende eines Rohrführungskanals 9 angeordnet ist und in diesem einen Anschlag 10 für ein einzuführendes Wellrohr 20 bildet. Das Wellrohr 20 ist ein Schutzrohr für ein hier nicht gezeigtes flexibles Rohr, das insbesondere ein Wasserrohr ist. Das Rohr kann aber auch ein Rohr für ein anderes Medium, beispielsweise ein Gasrohr sein. Das Wellrohr 20 besitzt in bekannter Weise umlaufende Rillen 21. Solche Wellrohre 20 sind allgemein bekannt.

Zum Einführen des Wellrohres 20 in den Rohrführungskanal 9 besitzt das Gehäuse 2 gemäss Figur 4 eine im Querschnitt kreisrunde Öffnung 5. Diese Öffnung 5 wird durch einen Stutzen 6 gebildet, der mitttels eines Filmscharniers 7 schwenkbar am Gehäuse 2 befestigt ist. Im eingeschwenkten Zustand gemäss Figur 4 wird der Stutzen 6 durch zwei seitliche Rastmittel 24 fixiert. Diese Rastmittel 24 sind beispielsweise Rastzungen, die an entsprechenden Rastmitteln des Gehäuses 2 eingerastet sind. Im verrasteten Zustand befindet sich innerhalb der Öffnung 5 eine weitere Öffnung 25, die durch eine Dichtungsmembran 8 gebildet wird. Diese Dichtungsmembran 8 ist gummielastisch ausgebildet und greift bei einem eingeschobenen Wellrohr 20 gemäss Figur 4 in eine Rille 21 so ein, dass das Wellrohr 20 mit dieser Dichtungsmembran 8 gegen Aussen abgedichtet ist. Die Dichtungsmembran 8 kann am Gehäuse 2 angespritzt sein.

Zum Befestigen des Gehäuses 2 auf der Schalung 19 sind an einer Oberseite 4 des Gehäuses 2 mehrere Nagelführungen 12 angeordnet, in denen Nägel vormontiert sein können. An den Seitenwandungen 15 und 16 sind Nuten 17 und korrespondierende Federn 18 vorgesehen, die es ermöglichen, den Schalungskasten 1 mit benachbarten gleichen Schalungskästen lösbar zu verbinden. Es können somit mehrere Schalungskästen 1 nebeneinander auf der Schalung 19 befestigt werden. Die Schalungskästen 1 können auch zusammengesteckt werden, wenn bereits ein Schalungskasten 1 auf der Schalung 19 befestigt ist.

An der Wandung 14 sind innenseitig Rastmittel 11 angeordnet, die gemäss Figur 2 in den Rohrführungskanal 9 ragen. Diese Rastmittel 11 sind in Einführungsrichtung des Wellrohres 20 gesehen im Wesentlichen am Ende und in der Nähe des Anschlages 10 angeordnet. Die Rastmittel 11 bestehen aus einer Rastzunge 11a und einer Rastzunge 11b. Die Rastzunge 11a ist ersichtlich etwas länger als die Rastzunge 11b. Ist ein Wellrohr 20 gemäss Figur 4 bis zum Anschlag 10 in den Rohrführungskanal 9 eingeführt, so sind die beiden Rastzungen 11a und 11b wie gezeigt umgebogen und greifen jeweils in eine Rille 21 ein. Die Rastzungen 11a und 11b bilden damit eine Art Widerhaken, die das eingeführte Wellrohr 20 im Gehäuse 2 fixieren. Das eingeführte Wellrohr 20 kann dann somit nur mit grösserer Kraft aus dem Gehäuse 2 herausgezogen werden.

Die Rastzungen 11a und 11b sind so ausgebildet, dass das Verrasten beim Einschieben des Wellrohres 20 hörbar ist. Da die Rastmittel 11 unmittelbar vor dem Anschlag 10 angeordnet sind, erfolgt das hörbare Verrasten erst dann, wenn das Wellrohr 20 hinreichend tief in das Gehäuse 2 eingeschoben ist. Ist das Wellrohr 20 nicht genügend tief eingeschoben, so kann entsprechend das genannte Rastgeräusch nicht vernommen und das Wellrohr 20 auch wieder aus dem Gehäuse 2 mit geringer Kraft herausgezogen werden. Auf das Ende des Wellrohres 20 kann gemäss Figur 4 ein Stopfen 27 aufgesetzt sein, der diese vordere Öffnung des Wellrohres 20 verschliesst.

Anstelle des gezeigten Wellrohrs 20 kann auch ein solches mit kleinerem Aussendurchmesser montiert werden. Das Verrasten erfolgt in diesem Fall zumindest mit der längeren Rastzunge 11 a. Die Dichtungsmembran 8 kann aufgrund ihrer Elastizität auch ein solches Wellrohr abdichten.

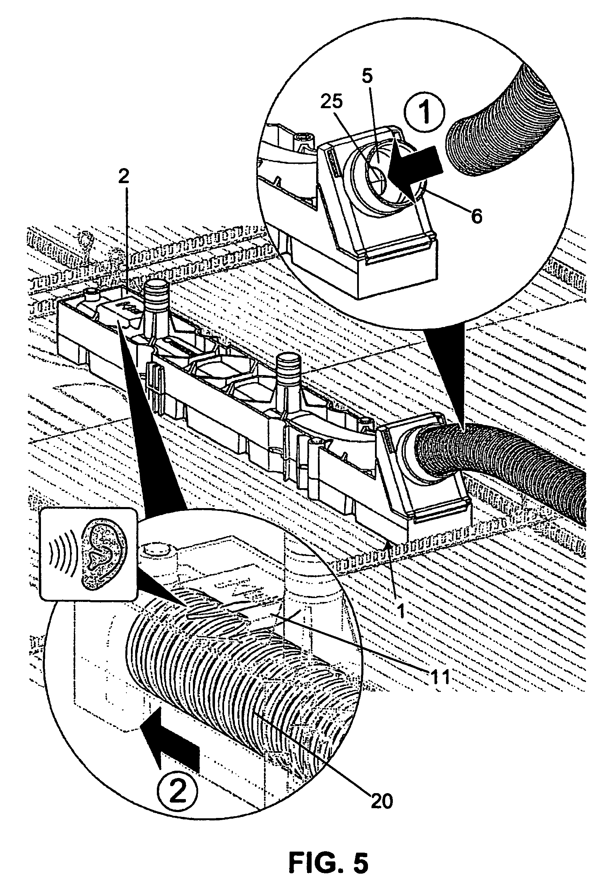

Die Figur 5 zeigt das Einschieben des Wellrohres 20 in die Öffnung 5. Beim Montieren wird zuerst das Gehäuse 2 auf der Schalung 19 befestigt. Gegebenenfalls können mehrere miteinander gekuppelte Gehäuse 2 auf der Schalung 19 befestigt werden. Möglich ist auch ein nachträgliches Kuppeln von Gehäusen 2. Nun wird das Wellrohr 20 durch die Öffnung 5 in den Rohrführungskanal 9 eingeschoben, bis das oben erwähnte Rastgeräusch hörbar ist und ein weiteres Einschieben aufgrund des Anschlages 10 nicht mehr möglich ist. Der Schalungskasten 1 kann nun einbetoniert werden. Nach dem Ausschalen ist das eingeführte Ende 20a des Wellrohres 20 durch die Öffnung 13 zugänglich und kann nach unten aus der Öffnung 13 herausgebogen werden.

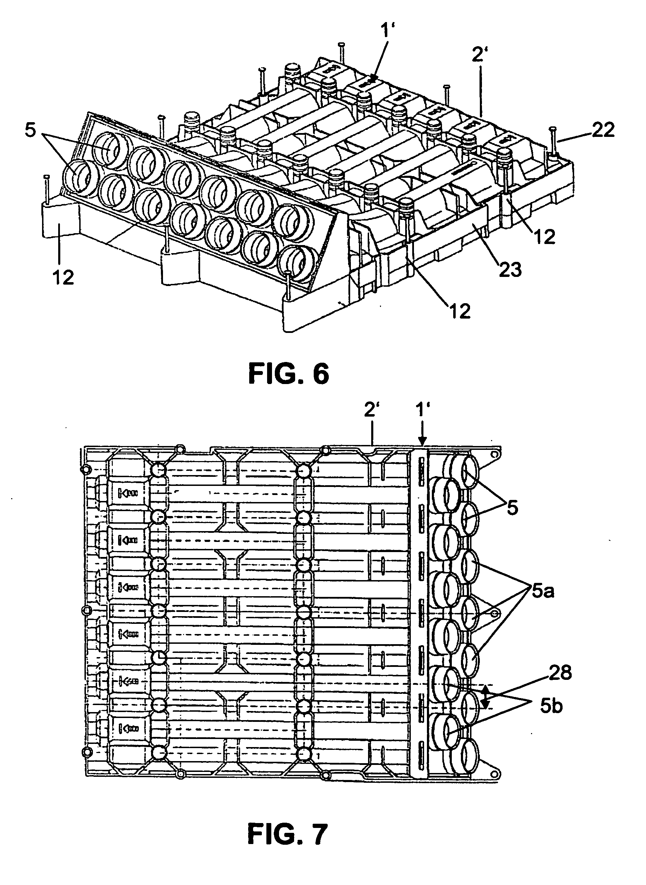

Die Figuren 6 und 7 zeigen einen Schalungskasten 1', der mehrere Öffnungen 5 und entsprechend mehrere hier nicht gezeigte Rohrführungskanäle aufweist. Zum Befestigen des Schalungskastens 1' auf einer Schalung 19 besitzt dieser einen Rahmen 23 mit mehreren Nagelführungen 12, in denen jeweils ein Nagel 22 vormontiert ist. Die Öffnungen 5 sind in Gruppen aus Öffnungen 5a und 5b aufgeteilt. Diese befinden sich jeweils in einer Ebene. Die Öffnungen 5b sind jeweils bezüglich der Öffnungen 5a wie ersichtlich verschoben. Die Öffnungen 5a und 5b sind so angeordnet, dass das in Figur 7 mit einem Doppelpfeil 28 angegebene Halbverteilermass kleiner ist als der Aussendurchmessers des Wellrohres 20. Dadurch ist eine besonders dichte Anordnung von mehreren Wellrohren 20 möglich. Auch beim Schalungskasten 1' sind die oben erwähnten Rastmittel 11 vorgesehen, so dass auch hier die Wellrohrer 20 wie oben erläutert montierbar sind.

### BEZUGSZEICHENLISTE

- 1: Schalungskasten
- 2: Gehäuse
- 3: Unterseite
- 4: Oberseite
- 5: Öffnung
- 6: Sutzten
- 7: Filmscharnier
- 8: Dichtungsmembran
- 9: Rohrführungskanal
- 10: Anschlag
- 11: Rastmittel
- 11a: Rastzunge
- 11b: Rastzunge
- 12: Nagelführung
- 13: Öffnung
- 14: Wandung
- 15: Seitenwandung
- 16: Seitenwandung
- 17: Nut
- 18: Feder
- 19: Schalung
- 20: Wellrohr
- 21: Rillen
- 22: Nagel
- 23: Rahmen
- 24: Rastmittel
- 25: Öffnung
- 26: Wandung
- 27: Stopfen
- 28: Doppelpfeil

## Patentansprüche

1. Schalungskasten, mit einem Gehäuse (2), das an einer Schalung (19) befestigbar ist und mit welchem ein Wandaustritt für ein in einen Rohrführungskanal (9) des Gehäuses (2) eingeführtes und einzubetonierendes Schutzrohr (20) herstellbar ist, mit einer an einem Ende des Gehäuses (2) angeordneter Öffnung (5), welche in den Rohrführungskanal (9) mündet und durch welche das einzubetonierende Schutzrohr (20) in den Rohrführungskanal (9) einführbar ist, **dadurch gekennzeichnet, dass** in Einschubrichtung gesehen im Wesentlichen an einem Ende des Rohrführungskanals (9) Rastmittel (11) für das Schutzrohr (20) angeordnet sind, mit denen das in den Rohrführungskanal (9) eingeführte Schutzrohr (20) in Auszugsrichtung fixierbar ist.

2. Schalungskasten nach Anspruch 1, **dadurch gekennzeichnet, dass** im Rohrführungskanal (9) ein Anschlag (10) für das einzuführende Schutzrohr (20) angeordnet ist und dass die Rastmittel (11) nahe vor diesem Anschlag (10) angeordnet sind.

3. Schalungskasten nach Anspruch 1 oder 2, **dadurch gekennzeichnet, dass** die Rastmittel (11) widerhakenförmig ausgebildet sind.

4. Schalungskasten nach einem der Ansprüche 1 bis 3, **dadurch gekennzeichnet, dass** die Rastmittel (11) wenigstens zwei Rastelemente (11a, 11b) für unterschiedliche Rohraussendurchmesser aufweisen.

5. Schalungskasten nach einem der Ansprüche 1 bis 4, **dadurch gekennzeichnet, dass** innerhalb der genannten Öffnung (5) Dichtungsmittel (8) angeordnet sind, welche ein eingeführtes Schutzrohr (20) nach Aussen hin abdichtet.

6. Schalungskasten nach Anspruch 5, **dadurch gekennzeichnet, dass** die Dichtungsmittel (8) als gummielastische Dichtungsmembran ausgebildet sind.

7. Schalungskasten nach Anspruch 5 oder 6, **dadurch gekennzeichnet, dass** die Dichtungsmittel (8) so ausgebildet sind, dass sie bei einem eingeführten Schutzrohr (20), das als Wellrohr ausgebildet ist, in eine Rille (21) des Rohres eingreifen.

8. Schalungskasten nach einem der Ansprüche 1 bis 7, **dadurch gekennzeichnet, dass** die genannte Öffnung (5) durch einen Stutzen (6) gebildet wird, der schwenkbar am Gehäuse (2) befestigt ist.

9. Schalungskasten nach einem der Ansprüche 1 bis 8, **dadurch gekennzeichnet, dass** das Gehäuse (2) lediglich einen Rohrführungskanal (9) aufweist.

10. Schalungskasten nach einem der Ansprüche 1 bis 8, **dadurch gekennzeichnet, dass** das Gehäuse (2') mehrere Öffnungen (5) und entsprechend mehrere Rohrführungskanäle (9) aufweist.

11. Schalungskasten nach Anspruch 10, **dadurch gekennzeichnet, dass** das Gehäuse (2') in einer ersten Ebene mehrere Öffnungen (5a) und in einer zweiten parallel zur ersten Ebene verlaufenden Ebene weitere Öffnungen (5b) aufweist.

12. Schalungskasten nach Anspruch 11, **dadurch gekennzeichnet, dass** die Öffnungen (5a) der ersten Ebene gegenüber den Öffnungen (5b) der zweiten Ebene versetzt sind.

13. Schalungskasten nach Anspruch 10 oder 11 **dadurch gekennzeichnet, dass** das Halbverteilermass (28) der genannten Öffnungen (5) kleiner ist als der Aussendurchmesser der einführbaren Schutzrohre (20).

14. Schalungskasten nach einem der Ansprüche 10 bis 12, **dadurch gekennzeichnet, dass** er einen Rahmen (23) aufweist, der im Wesentlichen rechteckig ausgebildet ist und der mehrere Nagelführungen (12) aufweist.

## Claims

1. Formwork box having a housing (2), which can be fastened on a formwork (19) and by means of which it is possible to produce a wall outlet for a protective pipe (20), which is introduced into a pipe-guiding channel (9) of the housing (2) and is to be set in concrete, and having an opening (5), which is arranged at one end of the housing (2), opens out into the pipe-guiding channel (9) and through which the protective pipe (20) which is to be set in concrete can be introduced into the pipe-guiding channel (9), **characterized in that** latching means (11) for the protective pipe (20) are arranged substantially at one end of the pipe-guiding channel (9), as seen in the pushing-in direction, and, by way of these latching means, the protective pipe (20), once introduced into the pipe-guiding channel (9), can be fixed in the pulling-out direction.

2. Formwork box according to Claim 1, **characterized in that** a stop (10) for the protective pipe (20) which is to be introduced is arranged in the pipe-guiding channel (9), and **in that** the latching means (11) are arranged close in front of this stop (10).

3. Formwork box according to Claim 1 or 2, **characterized in that** the latching means (11) are designed in the form of barbs.

4. Formwork box according to one of Claims 1 to 3, **characterized in that** the latching means (11) have at least two latching elements (11a, 11b) for different external pipe diameters.

5. Formwork box according to one of Claims 1 to 4, **characterized in that** sealing means (8), which seal a protective pipe (20), once introduced, in the outward direction, are arranged within the aforementioned opening.

6. Formwork box according to Claim 5, **characterized in that** the sealing means (8) are designed in the form of an elastomeric sealing membrane.

7. Formwork box according to Claim 5 or 6, **characterized in that** the sealing means (8) are designed such that, with a protective pipe (20), designed as a corrugated pipe, in the introduced state, they engage in a corrugation (21) of the pipe.

8. Formwork box according to one of Claims 1 to 7, **characterized in that** the aforementioned opening (5) is formed by a stub (6), which is fastened in a pivotable manner on the housing (2).

9. Formwork box according to one of Claims 1 to 8, **characterized in that** the housing (2) has merely one pipe-guiding channel (9).

10. Formwork box according to one of Claims 1 to 8, **characterized in that** the housing (2') has a plurality of openings (5) and, correspondingly, a plurality of pipe-guiding channels (9).

11. Formwork box according to Claim 10, **characterized in that** the housing (2') has, in a first plane, a plurality of openings (5a) and, in a second plane, running parallel to the first plane, further openings (5b).

12. Formwork box according to Claim 11, **characterized in that** the openings (5a) in the first plane are offset in relation to the openings (5b) in the second plane.

13. Formwork box according to Claim 10 or 11, **characterized in that** the half-division (28) between the aforementioned openings (5) is smaller than the external diameter of the protective pipe (20) which can be introduced.

14. Formwork box according to one of Claims 10 to 12, **characterized in that** it has a frame (23) which is of substantially rectangular design and has a plurality of nail guides (12).

## Revendications

1. Caisse de coffrage, comprenant un boîtier (2) qui peut être fixé à un coffrage (19), et avec lequel une sortie de paroi pour un tuyau de protection (20) à bétonner et introduit dans un canal de guidage de tuyau (9) du boîtier (2) peut être fabriqué, comprenant une ouverture (5) disposée à une extrémité du boîtier (2), laquelle débouche dans le canal de guidage de tuyau (9) et à travers laquelle le tuyau de protection (20) à bétonner peut être introduit dans le canal de guidage de tuyau (9), **caractérisée en ce que**, vu dans la direction d'enfoncement, essentiellement à une extrémité du canal de guidage de tuyau (9), sont disposés des moyens d'encliquetage (11) pour le tuyau de protection (20), avec lesquels le tuyau de protection (20) introduit dans le canal de guidage de tuyau (9) peut être fixé dans la direction d'extraction.

2. Caisse de coffrage selon la revendication 1, **caractérisée en ce que** dans le canal de guidage de tuyau (9) est disposée une butée (10) pour le tuyau de protection (20) à introduire, et **en ce que** les moyens d'encliquetage (11) sont disposés à proximité et devant cette butée (10).

3. Caisse de coffrage selon la revendication 1 ou 2, **caractérisée en ce que** les moyens d'encliquetage (11) sont réalisés en forme de barbe.

4. Caisse de coffrage selon l'une quelconque des revendications 1 à 3, **caractérisée en ce que** les moyens d'encliquetage (11) présentent au moins deux éléments d'encliquetage (11a, 11b) pour différents diamètres extérieurs de tuyau.

5. Caisse de coffrage selon l'une quelconque des revendications 1 à 4, **caractérisée en ce qu'**à l'intérieur de ladite ouverture (5) sont disposés des moyens d'étanchéité (8) qui étanchéifient par rapport à l'extérieur un tuyau de protection (20) introduit.

6. Caisse de coffrage selon la revendication 5, **caractérisée en ce que** les moyens d'étanchéité (8) sont réalisés sous forme de membrane d'étanchéité ayant l'élasticité du caoutchouc.

7. Caisse de coffrage selon la revendication 5 ou 6, **caractérisée en ce que** les moyens d'étanchéité (8) sont réalisés de telle sorte qu'ils viennent en prise dans une gorge (21) du tuyau lorsqu'un tuyau de protection (20), qui est réalisé sous forme de tuyau ondulé, est introduit.

8. Caisse de coffrage selon l'une quelconque des revendications 1 à 7, **caractérisée en ce que** ladite ouverture (5) est formée par une tubulure (6) qui est fixée de manière pivotante au boîtier (2).

9. Caisse de coffrage selon l'une quelconque des revendications 1 à 8, **caractérisée en ce que** le boîtier (2) présente seulement un canal de guidage de tuyau (9).

10. Caisse de coffrage selon l'une quelconque des revendications 1 à 8, **caractérisée en ce que** le boîtier (2') présente plusieurs ouvertures (5) et, de manière correspondante, plusieurs canaux de guidage de tuyau (9).

11. Caisse de coffrage selon la revendication 10, **caractérisée en ce que** le boîtier (2') présente, dans un premier plan, plusieurs ouvertures (5a), et dans un deuxième plan s'étendant parallèlement au premier plan, d'autres ouvertures (5b).

12. Caisse de coffrage selon la revendication 11, **caractérisée en ce que** les ouvertures (5a) du premier plan sont décalées par rapport aux ouvertures (5b) du deuxième plan.

13. Caisse de coffrage selon la revendication 10 ou 11, **caractérisée en ce que** la demi-dimension de répartition (28) desdites ouvertures (5) est inférieure au diamètre extérieur des tuyaux de protection (20) pouvant être introduits.

14. Caisse de coffrage selon l'une quelconque des revendications 10 à 12, **caractérisée en ce qu'**elle présente un cadre (23), qui est réalisé sensiblement sous forme rectangulaire et qui présente plusieurs guidages de clous (12).
